# EUROPEAN PATENT APPLICATION

(11) **EP 0 918 013 A1**
(43) Date of publication of application: **26.05.1999**
(21) Application number: 97650047.0
(22) Date of filing: 21.10.1997
(51) Int. Cl.: B62H 3/00, B62H 5/00

(54) **Anti-theft motor vehicle anchor and method**

(30) Priority: 21.10.1996 US 734252
(71) Applicant: Garnsworthy, David, Beaumont, Dublin 9 (IE)
(72) Inventor: Garnsworthy, David, Beaumont, Dublin 9 (IE)
(74) Representative: Schütte, Gearoid

(57) **Abstract**

An antitheft motor-vehicle anchor (**1, 28, 35**) is affixed immovably to a surface position (**30**) proximate a parking place and has a break-resistant connecter (**7, 9, 10, 31, 33, 36, 37**) that is lockable to a wheel (**14**), frame and/or axle of a motor vehicle or vehicular unit to prevent its theft by being carried, towed or pushed away. The break-resistant connector can be retractable or otherwise raised to and lowered from or optionally fixed in a locking or clamping position. Either a fixed or a retractably raised and lowered embodiment can be used as a locking motorcycle stand. A raised and lowered or otherwise retractable embodiment is flush with a surface of a parking place.

## Description

### BACKGROUND OF THE INVENTION

### 1. Field of the Invention.

This invention relates to prevention of theft of vehicles and in particular to anchoring wheels, axles or frames of vehicles to a land anchor to prevent their theft from parking places such as driveways, parking lots and motorcycle stands.

### 2. Relation To Prior Art

A wide variety of wheel-locking attachments are described in patent documents, in motor-vehicle literature and otherwise known to exist. None, however, are anchors which hold a vehicle wheel or other part of a vehicle to a surface anchor to prevent its theft or unauthorized movement in a manner taught by this invention.

Most wheel-locking attachments are physical obstructions to wheel rotation or rotation-preventive connection of a wheel to a vehicle. With present vehicle carriers, existing locking systems are inadequate protection against theft of motor vehicles, particularly motorcycles.

### SUMMARY OF THE INVENTION

In light of need for improvement in prevention of theft of motor vehicles, particularly motorcycles, objects of this invention are to provide an antitheft motor-vehicle anchor which:
Can be positioned in private and commercial parking places to prevent theft or unauthorized removal of motor vehicles, including vehicular units such as trailers and sidecars;
Can be used as a locking motorcycle stand;
Can lock to frames and axles in addition to wheels of all types of motor vehicles and vehicular units; and
Prevents motor vehicles and vehicular units from being carried away without authorization, even though ignition-locked or wheel-locked.

This invention accomplishes these and other objectives with an antitheft motor-vehicle anchor that is affixed immovably to a surface position proximate a parking place and has a break-resistant connecter that is lockable to a wheel, frame and/or axle of a motor vehicle or vehicular unit to prevent its theft by being carried, towed or pushed away. The break-resistant connector can be retractable or otherwise raised to and lowered from or optionally fixed in a locking or clamping position. Either a fixed or a retractably raised and lowered embodiment can be used as a locking motorcycle stand. A raised and lowered or otherwise retractable embodiment is flush with a surface of a parking place.

### BRIEF DESCRIPTION OF DRAWINGS

This invention is described by appended claims in relation to description of a preferred embodiment with reference to the following drawings which are described briefly as follows:
**FIG. 1** is a perspective view of a box-attachment embodiment with linearly hinged attachment plates pivoted down in a non-use mode;
**FIG. 2** is a partially cutaway end view of a box-attachment embodiment with linearly hinged attachment plates pivoted up in a use mode;
**FIG. 3** is a partially cutaway top view of the **FIG. 2** illustration;
**FIG. 4** is a sectional view of a covered padlock on a lock pin having a shackle orifice;
**FIG. 5** is a sectional view of a covered padlock on a lock pin having a shackle channel;
**FIG. 6** is a partially cutaway end view of a box-attachment embodiment with cross-hinged attachment plates pivoted up in a use mode;
**FIG. 7** is a partially cutaway end view of a box-attachment embodiment with cross-hinged attachment plates pivoted up in a use mode;
**FIG. 8** is a top view of a box-attachment embodiment with cross-hinged attachment plates pivoted down in a non-use mode;
**FIG. 9** is a partially cutaway elevation view of a fixed-attachment embodiment with a chain attached for a break-resistant fastener attachable to vehicles;
**FIG. 10** is a partially cutaway elevation view of a fixed-attachment embodiment with a plate attached for a break-resistant fastener attachable to vehicles;
**FIG. 11** is a partially cutaway elevation view of an anchor-cavity embodiment having a chain for a break-resistant fastener retracted in the anchor cavity;
**FIG. 12** is a partially cutaway elevation view of an anchor-cavity embodiment having an anchor rod for a break-resistant fastener retracted in the anchor cavity; and
**FIG. 13** is a partially cutaway elevation view of an anchor-cavity embodiment having an anchor bar for a break-resistant fastener retracted in the anchor cavity.

### DESCRIPTION OF PREFERRED EMBODIMENTS

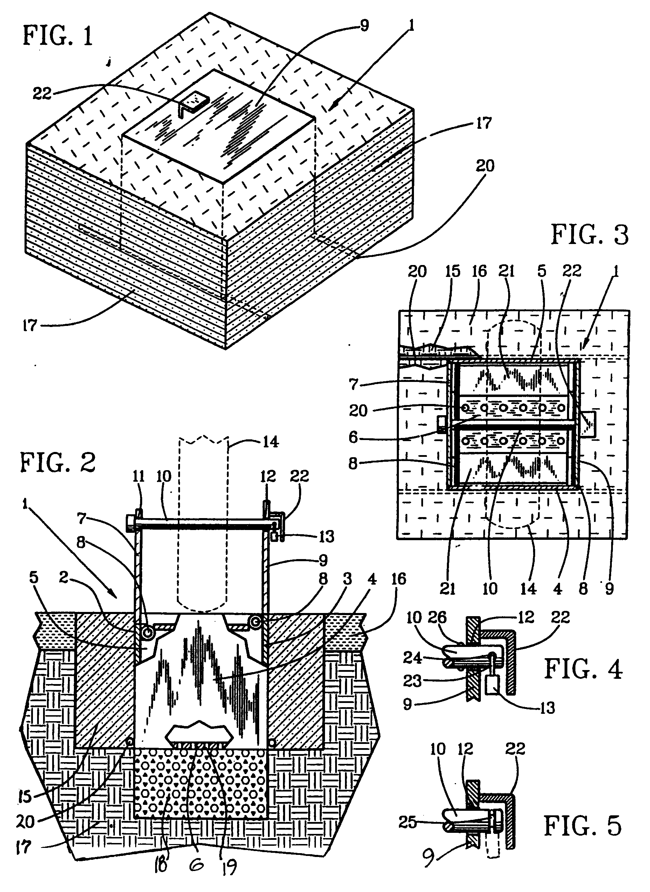

Reference is made first to **FIGS. 1-3** of the drawings. A box-attachment embodiment has a metal box **1** as an anchor base for a motor-vehicle anchor that is immovably attached to a vehicle parking place. The metal box **1** has a first side **2**, a second side **3,** a front side **4**, a back side **5** and a bottom **6.** A first attachment plate **7** is hinged linearly to the first side **2** with a linear bolt hinge **8.** A second attachment plate **9** is hinged linearly to the second side **3** with a separate linear bolt hinge **8**.

The first attachment plate **7** and the second attachment plate **9** provide a lid covering for the metal box **1** when pivoted down to a non-use mode as depicted in **FIG. 1.** Pivoted up to a use mode as depicted in **FIGS. 2-3**, the first attachment plate **7** and the second attachment plate **9** are part of a securely break-resistant fastener. A lock pin **10** is inserted through a first lock-pin orifice **11** in the first attachment plate **7**, passed selectively over and/or through a select part of a motor vehicle and then inserted through a second lock-pin orifice **12**. There a padlock **13** or other locking device can be locked onto the lock pin **10** to complete the break-resistant fastener.

The lock pin **10** is proximate a distal portion of a break-resistant fastener. The attachment plates **7** and **9** are proximate a proximal portion of the break-resistant fastener where attached hingedly to the sides **2** and **3** of the metal box **1**. A select portion of a motor vehicle to which the lock pin **10** is attachable can be a wheel, an axle, a portion of vehicular frame, a portion of a drive train, some other relatively immovable portion or a combination of such portions of a vehicle as represented by a dashed-line outline of a vehicle wheel **14**.

The metal box **1** is embedded in concrete **15** or other cementing material with a top surface flush with a top surface of either paving material **16** or earth **17** that is not paved. The bottom **6** of the metal box **1** can be positioned on drainage material **18** such as gravel and can have drainage orifices **19**. The metal box **1** can be sized and shaped to receive the lock pin **10** in a non-use mode. Reinforcement bars **20** can be attached to or passed through the metal box **1** for securely immovable attachment of the motor-vehicle anchor to the vehicle parking place.

Support plates **21** can be positioned proximate a top of the metal box **1** to prevent wheels **14** of vehicles from falling into it. The support plates **21** can be attached to the sides **2** and **3**, to the sides **4** and **5** or to bottom extensions as designed to accommodate juxtaposed positioning of the first attachment plate **7** and the second attachment plate **9** when pivoted down for non-use mode. Positioning of linear bolt hinges **8** also must be accommodated for positioning of the support plates **21**. A bridge base between either pairs of opposite sides is a preferable construction that leaves the metal box **1** most nearly empty and still accommodates juxtaposed positioning of the attachment plates **7** and **9**.

Juxtaposed positioning of the attachment plates **7** and **9** with the second attachment plate **9** on top of the first attachment plate **7** can be accomplished with the first attachment plate **7** positioned lower and made shorter than the second attachment plate **9** as depicted in **FIG. 2.**

Referring to **FIGS. 1-6**, a padlock guard **22** can be affixed to the second attachment plate **9** at a position vertically above the second lock-pin orifice **12**. The padlock guard **22** can be a section of angle iron with a base welded or otherwise attached permanently to the second attachment plate **9**. A leg of the angle iron can extend sufficiently beyond the second lock-pin orifice **12** to cover a design portion of a padlock **13** to obstruct its unauthorized opening.

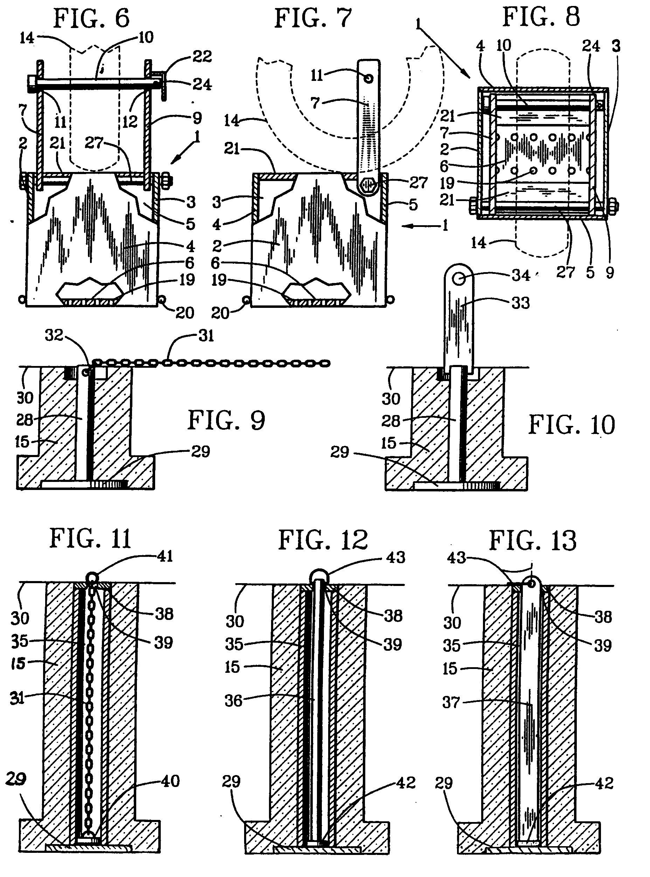

A shackle receptacle for a padlock shackle **23** can be a shackle orifice **24** as depicted in **FIG. 4** or a circumferential channel **25** that is sized to receive a design size and type of padlock shackles **23** as shown in **FIG. 5.**

As shown in **FIG. 4,** the lock pin **10** can have resister nibs **26** that can be either rigid to prevent or spring-loaded to resist designedly the passage of the lock pin **10** through the first lock-pin orifice **11**.

Referring to **FIGS. 6-8**, a first attachment plate **7** and a second attachment plate **9** can be on a cross-bolt hinge to pivot between up and down positions. A cross-bolt hinge is represented by a cross bolt **27** in cross-bolt orifices at bases of the first attachment plate **7** and the second attachment plate **9**. The cross bolt **27** is fastened to tops of the first side **2** and the second side **3** of the metal box **1**. A fastener head and nut on the cross bolt **27** are representative of fastening means generally, not necessarily a preferred means. For use of a cross-bolt hinge, the attachment plates **7** and **9** are narrower than described in relation to **FIGS. 1-3** and they pivot edgewise instead of sideways. The first attachment plate **7** can be the same length as the attachment plate **9** and the support plates **21** can be attached differently than described in relation to **FIGS 1-3** as illustrated for use of the cross-bolt hinge.

Referring to **FIGS. 9-10,** the motor-vehicle anchor can be a stationary rod **28** having an undercut flange **29** with which the stationary rod **28** is undercut-cemented to concrete **15** that is undercut-formed below a parking-place surface **30**. The break-resistant fastener can be a flexible member such as a chain **31** that is attached to a top of the stationary rod **28** by such means as an attachment ring **32**. To use this embodiment, a distal portion of the chain **31** is wrapped around, positioned on or inserted through a desired part of a motor vehicle and then locked to a proximal portion of the chain **31** proximate the attachment ring **32**. Optionally, the distal portion of the chain **31** can be locked to the attachment ring **32** after being routed in a desired encompassing relationship to a select portion of the motor vehicle. A padlock or other locking means can be employed to lock the distal portion of the chain **31** to a proximal portion or to the attachment ring **32**.

A singular attachment plate **33** shown in **FIG. 10** can be attached to the stationary rod **28** instead of the chain **31** depicted in **FIG. 9.** The singular attachment plate **33** can be attached rigidly or pivotally to the stationary rod **28**. An attachment aperture **34** in a distal end of the singular attachment plate **33** can be employed optionally for such break-resistant fastener as a chain **31** or for one end of a lock pin **10** described in relation to **FIGS. 2-8.**

A design plurality and grouping of stationary rods **28** with either a chain **31**, a singular attachment plate **33** or other break-resistant fasteners can be employed. For example, positioning two stationary rods **28** side-by-side with singular attachment plates **33** that are rigidly attached can be a locking motorcycle stand if appropriately structured and positioned. Side-by-side singular attachment plates **33** that are pivotally attached to the stationary rods **28** can be used similarly to the first attachment plate **7** and second attachment plate **9** on the metal box **1** described in relation to **FIGS. 1-8**.

Referring to **FIGS. 11-13**, the motor-vehicle anchor can have at least one anchor cavity **35** that is undercut-encased in concrete **15** that is undercut-positioned a design distance in ground material beneath a surface **30** of a parking place. The anchor cavity **35** can be sized, shaped and structured to receive a break-resistant fastener that is flexible, such as a chain **31** shown in **FIG. 11.** Optionally, the anchor cavity **35** can be sized, shaped and structured to receive a break-resistant fastener that is solidly cylindrical, such as an anchor rod **36** shown in **FIG**. **12**, or solidly rectangular, such as an anchor bar **37** shown in **FIG. 13.** A cavity retainer plate **38** with a cavity aperture **39** is positioned in a top entrance to the anchor cavity **35**.

The chain **31**, the anchor rod **36** and the anchor bar **37** are each structured for a matching anchor cavity **35** with an inside periphery that is appropriately cylindrical or rectangular. The chain **31** has an anchor ring **40** on its proximal end and a lock ring **41** on its distal end. The anchor ring **40** and the lock ring **41** are structured too large to pass through the cavity aperture **39**, such that the chain **31** is stored in the anchor cavity **35** and a desired portion of the chain **31** can be pulled selectively from the anchor cavity **35** to be locked onto a select portion of a vehicle with a fastener lock such as a padlock **13** having lock shackles **23** locked into links of the chain **31** without passage of the chain **31** into the anchor cavity **35** and without passage of the chain **31** out of the anchor cavity **35**. A padlock **13** with padlock shackles **23** is described in relation to **FIGS. 4-5.**

The anchor rod **36** has an anchor ridge **42** on its proximal end and a lock retainer **43** on its distal end. The anchor ridge **42** and the lock retainer **43** on the anchor rod **36** are structured too large to pass through the cavity aperture **39**, such that the anchor rod **36** is stored in the anchor cavity **35** and a desired portion of the anchor rod **36** can be lifted selectively from the anchor cavity **35** to be locked onto a select portion of a vehicle with a break-resistant fastener such as a chain **31** with a fastener lock such as a padlock **13** having a lock shackle **23** locked into links of the chain **31** without passage of the anchor rod **36** into the anchor cavity **35** and without passage of the anchor rod **36** out of the anchor cavity **35**. The lock retainer **43** can be a ring that is loosely fit into an orifice on the distal end of the anchor rod **36**.

The anchor bar **37** also has an anchor ridge **42** on its proximal end and a lock retainer **43**. The anchor ridge **42** and the lock retainer **43** on the anchor bar **37** are structured too large to pass through the cavity aperture **39**, such that the anchor bar **37** is stored in the anchor cavity **35** and a desired portion of the anchor bar **37** can be lifted selectively from the anchor cavity **35** to be locked onto a select portion of a vehicle with a break-resistant fastener such as a chain **31** with a fastener lock such as a padlock **13** having a lock shackle **23** locked into links of the chain **31** without passage of the anchor bar **37** into the anchor cavity **35** and without passage of the anchor bar **37** out of the anchor cavity **35**. The lock retainer **43** can be a ring that is loosely fit into an orifice on the distal end of the anchor bar **37**.

Like the embodiments of motor-vehicle anchors described in relation to **FIGS. 9-10**, those described in relation to **FIGS. 11-13** can be positioned in tandem pairs or other pluralities for attachment to select portions of select types of motor vehicles. Tandem pairs of the embodiments described in relation to **FIGS. 12-13** would be particularly suitable for locking motorcycle stands, while the embodiment described in relation to **FIG. 11** would be suitable for tying down a motorcycle or other type of vehicle. All embodiments of this invention can be structured and positioned in accordance with design preferences as an antitheft motor-vehicle anchor.

A method for locking a motor vehicle to a parking place is provided by immovably attaching a motor-vehicle anchor such as described in relation to **FIGS. 1-13** to a vehicle parking place, by fastening a design structural portion of the motor vehicle to the motor-vehicle anchor with a designedly break resistant fastener such as described in relation to **FIGS. 1-13** and then by locking the designed break-resistant fastener to the motor vehicle as described in relation to **FIGS. 1-13.**

A new and useful antitheft motor-vehicle anchor having been described, all such foreseeable modifications, adaptations, substitutions of equivalents, mathematical possibilities of combinations of parts, pluralities of parts, applications and forms thereof as described by the following claims and not precluded by prior art are included in this invention.

## Claims

1. An antitheft motor-vehicle anchor comprising:
a motor-vehicle anchor immovably attached to a vehicle parking place;
an immovable attachment of the motor-vehicle anchor to the vehicle parking place being sized, shaped and structured to prevent removal of the motor-vehicle anchor by foreseeably unauthorized means;
a break-resistant fastener having a proximal portion attached to the motor-vehicle anchor and a distal portion attachable to a select portion of a motor vehicle;
the break-resistant fastener being sized, shaped and structured to prevent breakage by foreseeably unauthorized means; and
a lock fastener that is structured and positioned for locking the break-resistant fastener to the select portion of the motor vehicle.

2. An antitheft motor-vehicle anchor as described in claim **1** wherein:
the immovable attachment of the motor-vehicle anchor to the vehicle parking place has an anchor base with a reinforcement portion embedded in cement.

3. An antitheft motor-vehicle anchor as described in claim **2** wherein:
the cement in which the reinforcement portion is embedded is vertically under a portion of vehicle parking place that is paved.

4. An antitheft motor-vehicle anchor as described in claim **2** wherein:
the cement in which the reinforcement portion is embedded is vertically under a portion of vehicle parking place that is unpaved.

5. An antitheft motor-vehicle anchor as described in claim **2** wherein:
the anchor base is a metal box having reinforcement rods attached to a bottom of the metal box;
the metal box and the reinforcement rods are embedded in cement;
the metal box has a first attachment plate hinged to a first top side of the metal box and pivotal from a horizontal attitude vertically above the metal box to a vertical attitude that is designedly above the first top side of the metal box vertically;
the metal box has a second attachment plate hinged to a second top side of the metal box and pivotal from a horizontal attitude vertically above the metal box to a vertical attitude that is designedly above the second top side of the metal box vertically;
the first attachment plate and the second attachment plate are spaced apart designedly to allow positioning of a vehicle wheel between the first attachment plate and the second attachment plate in vertical attitudes;
the first attachment plate and the second attachment plate have lock-pin orifices sized and positioned to receive a lock pin that is inserted through a first lock-pin orifice, passed over a select portion of a vehicle from a first side of the select portion of the vehicle and then inserted through a second lock-pin orifice at a second side of the select portion of the vehicle; and
a lock pin that is inserted in the first lock-pin orifice and in the second lock-pin orifice has a lock-pin head on a first end and a padlock receptacle on a second end.

6. An antitheft motor-vehicle anchor as described in claim **5** wherein:
the metal box has support plates extended intermediate opposite sides proximate positions that are proximate a first hinge and a second hinge with which the first attachment plate and the second attachment plate are hinged to the metal box; and
the support plates are structured and positioned to prevent entry of a vehicle wheel into the metal box when the first attachment plate and the second attachment plate are in vertical attitudes.

7. An antitheft motor-vehicle anchor as described in claim **6** wherein:
the metal box is positioned on a drainage bed under a bottom of the metal box; and
the bottom of the metal box has drainage orifices through which liquid entering the metal box can be drained into the drainage bed.

8. An antitheft motor-vehicle anchor as described in claim **7** wherein:
the first attachment plate and the second attachment plate are sized and shaped to be positioned at opposite sides of a portion of a frame of a design class and size of vehicles;
lock-pin orifices are sized and positioned in the first attachment plate and in the second attachment plate to receive a lock pin that has been inserted through a first lock-pin orifice, positioned on a retainment side of a portion of a frame of a design class and size of vehicles and inserted through the second lock-pin orifice.

9. An antitheft motor-vehicle anchor as described in claim **7** wherein:
the metal box is sized and shaped to receive the lock pin in a storage mode.

10. An antitheft motor-vehicle anchor as described in claim **7** wherein:
the padlock receptacle is a shackle orifice that is sized to receive a design size and type of padlock shackles.

11. An antitheft motor-vehicle anchor as described in claim **7** wherein:
the padlock receptacle is a circumferential channel that is sized to receive a design size and type of padlock shackles.

12. An antitheft motor-vehicle anchor as described in claim **7** wherein:
the second attachment plate has an angled padlock guard extended vertically from a design side of a lock-pin orifice; and
the angled padlock guard is structured and positioned to cover a design portion of a padlock that is positioned on the lock pin.

13. An antitheft motor-vehicle anchor as described in claim **1** wherein:
the break-resistant fastener is a flexible member having a lock ring proximate the distal portion of the break-resistant fastener;
the flexible member is structured to be extended from a position of attachment to the motor-vehicle anchor and locked onto the select portion of the motor vehicle.

14. An antitheft motor-vehicle anchor as described in claim **13** wherein:
the flexible member is a chain.

15. An antitheft motor-vehicle anchor as described in claim **14** wherein:
the motor-vehicle anchor has an attachment ring to which the chain is attachable.

16. An antitheft motor-vehicle anchor as described in claim **1** wherein:
the motor-vehicle anchor has at least one anchor cavity that is undercut-encased in cement that is undercut-positioned a design distance in ground material beneath the vehicle parking place; and
a break-resistant fastener is positioned in the anchor cavity and extendible selectively from the anchor cavity for being locked to the select portion of the motor vehicle.

17. An antitheft motor-vehicle anchor as described in claim **16** wherein:
the break-resistant fastener is an anchor chain having a proximal end positioned in the anchor cavity and a distal end positioned linearly outside of the anchor cavity;
a top end of the anchor cavity has a cavity retainer plate with a cavity aperture that is structured to allow passage of the anchor chain through the cavity aperture;
the anchor chain has an anchor ring on the proximal end and a lock ring on the distal end of the anchor chain; and
the anchor ring and the lock ring on the anchor chain are structured too large to pass through the cavity aperture, such that the lock chain is stored in the anchor cavity and a desired portion of the anchor chain can be pulled selectively from the anchor cavity to be locked onto a select portion of a vehicle with a fastener lock such as a padlock having a lock shackle locked into links of the chain without passage of the lock chain into the anchor cavity and without passage of the lock chain out of the anchor cavity.

18. An antitheft motor-vehicle anchor as described in claim **16** wherein:
the anchor cavity has a cylindrical inside periphery;
the break-resistant fastener is an anchor rod having a proximal end positioned in an anchor cavity and a distal end positioned linearly outside of the anchor cavity;
a top end of the anchor cavity has a cavity retainer plate with a cavity aperture that is structured to allow passage of the anchor rod through the cavity aperture;
the anchor rod has an anchor ridge on the proximal end and a lock retainer on the distal end of the anchor rod;
the break-resistant fastener is positioned on the lock retainer; and
the anchor ridge and the lock retainer on the anchor rod are structured too large to pass through the cavity aperture, such that the anchor rod is stored in the anchor cavity and a desired portion of the anchor rod can be lifted selectively from the anchor cavity to be locked onto a select portion of a vehicle with a break-resistant fastener such as a chain with a fastener lock such as a padlock having a lock shackle locked into links of the chain without passage of the anchor rod into the anchor cavity and without passage of the anchor rod out of the anchor cavity.

19. An antitheft motor-vehicle anchor as described in claim **16** wherein:
the anchor cavity has a designedly rectangular inside periphery;
the break-resistant fastener is an anchor bar having a proximal end positioned in an anchor cavity and a distal end positioned linearly outside of the anchor cavity;
a top end of the anchor cavity has a cavity retainer plate with a cavity aperture that is structured to allow passage of the anchor bar through the cavity aperture;
the anchor bar has an anchor ridge on the proximal end and a lock retainer on the distal end of the anchor bar,
the break-resistant fastener is positioned on the lock retainer; and
the anchor ridge and the lock retainer on the anchor bar are structured too large to pass through the cavity aperture, such that the lock bar is stored in the anchor cavity and a desired portion of the anchor bar can be lifted selectively from the anchor cavity to be locked onto a select portion of a vehicle with a break-resistant fastener such as a chain with a fastener lock such as a padlock having a lock shackle locked into links of the chain without passage of the lock bar into the anchor cavity and without passage of the lock bar out of the anchor cavity.

20. An antitheft motor-vehicle anchor as described in claim **1** wherein:
the motor-vehicle anchor has an anchor member that is undercut cemented into concrete that is undercut formed into an anchor cavity for a design distance beneath the parking place;
at least one break-resistant fastener is attached to a top of the anchor member at a design position proximate a surface of the parking place; and the break-resistant fastener is attached designedly to the anchor plate.

21. A method comprising the following steps for locking a motor vehicle to a parking place:
immovably attaching a motor-vehicle anchor to a vehicle parking place;
fastening a design structural portion of the motor vehicle to the motor-vehicle anchor with a designedly break-resistant fastener; and
locking the designedly break-resistant fastener to the motor vehicle.
